# EUROPÄISCHE PATENTSCHRIFT

(11) **EP 0 413 046 B1**
(45) Veröffentlichungstag und Bekanntmachung des Hinweises auf die Patenterteilung: **14.04.1993**
(21) Anmeldenummer: 89115229.0
(22) Anmeldetag: 18.08.1989
(51) Int. Cl.: B23B 31/12

(54) **Nachspannendes Bohrfutter**
Self-clamping drill chuck
Mandrin de perçage autobloquant

(43) Veröffentlichungstag der Anmeldung: 20.02.1991
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- EP-A- 0 151 791
- EP-A- 0 302 992
- DE-A- 3 144 101
- FR-A- 2 417 363
- GB-A- 171 993
- GB-A- 2 034 210

## Beschreibung

Die Erfindung betrifft ein nachspannendes Bohrfutter mit einem zum Anschluß an eine Bohrspindel, insbesondere Hammerbohrspindel, eingerichteten Futterkörper, mit Spannbacken und einer am Futterkörper drehbar geführten Spannhülse zum Verstellen der Spannbacken, ferner mit einem Sperring, der am Futterkörper jeweils zwischen zwei Endstellungen in Umfangsrichtung verdrehbar und axial verschiebbar und mit der Spannhülse in Umfangsrichtung über zwei Zahnkränze kuppelbar ist, die in der dem eingekuppelten Zustand entsprechenden axialen Endstellung des Sperrings miteinander im Eingriff stehen, und mit einem zur Drehbegrenzung des Sperrings gegenüber dem Futterkörper an einem dieser beiden Teile angeordneten Anschlagstift, der in eine im anderen Teil vorgesehene Ausnehmung greift, deren Enden in Umfangsrichtung Anschlagflächen für den Anschlagstift bilden, wobei die Ausnehmung an ihrem in der relativ zu ihr nachspannenden Verstellrichtung des Anschlagstiftes hinteren Ende axial in eine zur Aufnahme des Anschlagstiftes eingerichtete Aussparung mündet, die sich von dieser Mündung aus in Umfangsrichtung gleich weit wie die Ausnehmung erstreckt und von dieser axial durch eine zur Mündung vorspringende Nase getrennt ist, und wobei der Anschlagstift in seiner Längsrichtung verschiebbar geführt ist und sein Kopf und/oder die die Ausnehmung auf der Seite der Nase axial begrenzende Randfläche in Axialrichtung mit Anlaufschrägen versehen sind, so daß der Anschlagstift von der Nase über die Anlaufschrägen gegen die Kraft einer Feder aus der Ausnehmung zurückgedrückt wird und in die Aussparung wieder vorspringt, wenn der Sperring axial aus der dem eingekuppelten Zustand entsprechenden Endstellung verschoben wird und dabei der Anschlagstift in zurückgedrücktem Zustand die Nase passiert.

Bohrfutter dieser Art sind in der nach Art. 54 (3) zum Stand der Technik gehörenden europ. Patentanmeldung EP-A-0395791 beschrieben und besitzen den Vorteil, daß die Nachspannwirkung durch die Ausnehmung begrenzt ist. Der Anschlagstift kann sich wahlweise am Futterkörper oder am Sperring und die Ausnehmung bzw. Aussparung umgekehrt am Sperring oder am Futterkörper befinden. In beiden Fällen kann nur dann der Anschlagstift in die Ausnehmung eintreten und dadurch der Sperring in die dem eingekuppelten Zustand entsprechende axiale Endstellung verschoben werden, wenn der Sperring in der mit dem Anfang seines Drehweges übereinstimmenden Drehstellung steht, denn nur dann kann der Anschlagstift die Mündung zwischen der Aussparung und der Ausnehmung passieren. Daher ermöglicht der Sperring nach seiner Einkupplung an der Spannhülse dieser immer den vollen Nachspannweg, der durch die Ausnehmung vorgegeben ist, und zwar unabhängig von dem die Nachspannung bewirkenden Aufbau des Bohrfutters. Jedoch kann der Sperring in jeder Drehstellung von der Spannhülse entkuppelt werden, so daß nicht zuvor der Sperring in die Ausgangsstellung zurückgedreht und dabei das Bohrfutter gelöst werden muß.

Während des Bohrbetriebs erfolgt eine zunehmende Nachspannung des Bohrfutters im Rahmen der durch die Ausnehmung vorgegebenen Grenze. Jedoch ist es nicht möglich, den jeweils tatsächlich erreichten Zustand der Nachspannung zu fixieren. Das Bohrfutter kann sich daher u. U. auch selbsttätig wieder in den Ausgangszustand vor der Nachspannung zurück verstellen, was mit einer entsprechenden Lockerung des im Bohrfutter gehaltenen Bohrwerkzeugs verbunden ist.

Der Erfindung liegt die Aufgabe zugrunde, ein Bohrfutter der eingangs genannten Art so auszubilden, daß der im Bohrbetrieb tatsächlich erreichte Nachspannzustand jeweils gesichert wird und das Bohrfutter sich nicht selbsttätig in den Ausgangszustand der Nachspannung zurück verstellen kann.

Diese Aufgabe wird nach der Erfindung dadurch gelöst, daß in der Ausnehmung eine Reihe von in Umfangsrichtung aufeinander folgenden, radial vorstehenden Anschlägen für den Kopf des Anschlagstiftes vorgesehen ist und die einander zugeordneten und zur gegenseitigen Anlage kommenden Flächen an den Anschlägen einerseits und am Kopf des Anschlagstiftes andererseits so ausgebildet sind, daß der Anschlagstift beim Verdrehen des Sperrings in der nachspannenden Drehrichtung unter jeweiligem Verschieben gegen die Feder über die Anschläge hinweggleitet und in der entgegengesetzten Drehrichtung an den Anschlägen festgehalten wird.

Die Anschläge lassen die Verdrehung des Sperrings in der nachspannenden Drehrichtung unbehindert, so daß die Nachspannwirkung durch die Anschläge unbeeinträchtigt bleibt. In der entgegengesetzten, dem Lösen des Bohrfutters entsprechenden Drehrichtung ist aber der Sperring durch die Anschläge gegen Verdrehen gesichert, so daß ein einmal erreichter Nachspannzustand fixiert wird. Ein Lösen des Bohrfutters ist erst möglich, wenn der Sperring in die von der Spannhülse entkuppelte axiale Endstellung verschoben und sich dabei der aus der Ausnehmung austretende Anschlagstift auch von den Anschlägen löst.

Eine bevorzugte Ausführungsform ist dadurch gekennzeichnet, daß die Ausnehmung radial durch einen dem Anschlagstift gegenüber liegenden Boden begrenzt ist, auf dem die Anschläge ausgebildet sind. Dabei wird die Anordnung zweckmäßigerweise so getroffen, daß der Anschlagstift an jeweils zwei in Umfangsrichtung aneinander anschließenden Flächen der Anschläge anliegt, von welchen die in der relativ zur Ausnehmung nachspannenden Verstellrichtung des Anschlagstiftes vordere Fläche der Stirnseite des Anschlagstiftes und die hintere Fläche an einer zur Stiftachse im wesentlichen parallelen Seitenfläche des Anschlagstiftes anliegt. Die vordere Anschlagfläche beaufschlagt daher den Anschlagstift in seiner Führungsrichtung und kann somit beim Verdrehen des Sperrings im Sinne eines Nachspannens des Bohrfutters den Anschlagstift nötigenfalls unter vorübergehendem Zurückdrücken gegen die Feder passieren, so daß in dieser Drehrichtung der Sperring durch den Anschlagstift und die Anschläge nicht behindert wird. Die entgegengesetzte Drehrichtung ist dagegen durch die dem Anschlagstift seitlich anliegende andere Anschlagfläche gesperrt, da sie den Anschlagstift quer zu seiner Führungsrichtung beaufschlagt und ihn daher nicht aus dem Eingriff an den Anschlägen zurückdrücken kann. Im einzelnen kann dabei die zur Stiftachse im wesentlichen parallele Seitenfläche des Anschlagstiftes von dessen Umfangsfläche gebildet sein. Die Anschläge können eine sägenartige Zahnreihe bilden, wobei die steile Sägezahnbrust der Seitenfläche des Anschlagstiftes und der Sägezahnrücken der Stirnfläche des Anschlagstiftes anliegt. Die Anschläge können aber auch eine getreppte Stufenfolge bilden, wobei die steile Stufenstirn der Seitenfläche des Anschlagstiftes anliegt. In dieser Ausführungsform besteht weiterhin die vorteilhafte Möglichkeit, daß sich die Ausnehmung entsprechend der getreppte Stufenfolge in der nachspannenden Verstellrichtung des Anschlagstiftes radial zunehmend vertieft, wobei alle einander entsprechenden Stufenflächen zueinander parallel sind, und daß die Stirnfläche des Anschlagstiftes im wesentlichen senkrecht zur Stiftachse ausgerichtet ist. Die Blockierung des Sperrings ist dann besonders stabil und sicher, weil die diese Blockierung bewirkenden Kanten am Anschlagstift und an den Anschlägen rechte Winkel bilden.

Im folgenden wird die Erfindung an einem in der Zeichnung dargestellten Ausführungsbeispiel näher erläutert; es zeigen:
- Fig. 1: ein nachspannendes Bohrfutter nach der Erfindung, teils in Seitenansicht, teils im Axialschnitt,
- Fig. 2: eine teilweise Abwicklung des Bohrfutters nach Fig. 1 in Richtung des in Fig. 1 eingetragenen Pfeiles II,

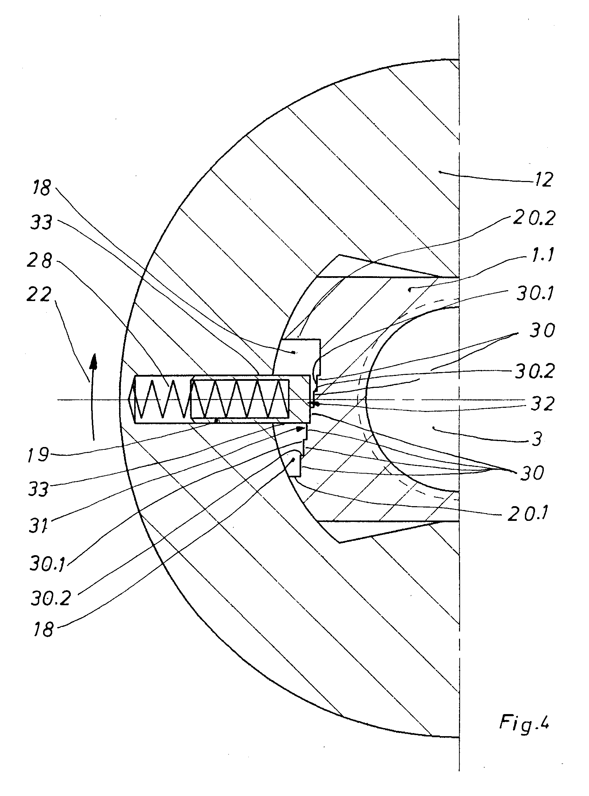

- Fig. 3 und 4: den Schnitt III-III in Fig. 1.

Das aus der Zeichnung ersichtliche Bohrfutter ist zum Betrieb an einer nicht dargestellten Bohrspindel bestimmt, die entweder einteilig als zugleich die drehende wie auch die schlagende Bewegung ausführende Schlagbohrspindel oder als zweiteilige Hammerbohrspindel aus einem drehenden Spindelteil in Form einer Hohlwelle und einem schlagenden Spindhelteil in Form eines in der Hohlwelle axial verschiebbaren Döppers ausgebildet sein kann. Der Futterkörper 1 ist aus einem Spindelanschlußteil 1.1 und einem Spanngewindeteil 1.2 zusammengesetzt. Beide Teile 1.1, 1.2 stehen über ein Mitnahmeelement 2 in drehschlüssiger Verbindung miteinander. Der Spindelanschlußteil 1.1 des Futterkörpers 1 besitzt eine Gewindeaufnahme 3 für die Bohrspindel und einen zentralen axialen Durchgang 4, durch den hindurch die Schlagbewegungen des Döppers unmittelbar auf ein in das Bohrfutter eingesetztes, in der Zeichnung nicht dargestelltes Bohrwerkzeug übertragen werden können. Am Spanngewindeteil 1.2 des Futterkörpers 1 ist drehbar und axial unverschiebbar eine Spannhülse 5 geführt, die schräg zur Futterachse 6 verlaufende Führungsbohrungen 7 für drei im wesentlichen zylindrische Spannbacken 8 aufweist, die zwischen sich eine in der Zeichnung geschlossen dargestellte Aufnahme für das Bohrwerkzeug bilden. Zur Verstellung besitzen die Spannbacken 8 eine sich in ihrer Längsrichtung erstreckende Zahnreihe 9, deren Zähne im Eingriff mit einem Spanngewinde 10 stehen, das an einer kegeligen Fläche des Spanngewindeteils 1.2 vorgesehen ist. Die Spannhülse 5 ist axial über ein Kugellager 11 am Spanngewindeteil 1.2 des Futterkörpers 1 kraftschlüssig abgestützt. Wird die Spannhülse 5 relativ zum Spanngewindeteil 1.2 des Futterkörpers 1 verdreht, verschieben sich die Spannbacken 8 in ihren Führungen 7 in der Spannhülse 5, und zwar je nach Drehrichtung der Spannhülse 5 im Sinne eines Öffnens oder Schließens des Bohrfutters. Eine solche Verdrehung im Sinne eines Schließens des Bohrfutters bewirken insbesondere die beim Bohrvorgang durch den Bohrwiderstand am Werkstück auf das Bohrwerkzeug ausgeübten und von ihm über die Spannbacken 8 auf die Spannhülse 5 übertragenen Drehmomente, die somit eine Selbst- und Nachspannung des Bohrfutters ergeben, wobei die kraftschlüssige Abstützung durch das Kugellager 11 dazu dient, die sich bei der Spannung der Spannbacken 8 ergebende Reaktionskraft auf das Spanngewindeteil 1.2 gegen die Spannhülse 5 abzufangen, so daß sich der aus den Spannkräften ergebende Kraftfluß zwischen dem Spanngewindeteil 1.2 und der Spannhülse 5 schließen kann. Diese Nachspannwirkung tritt in gleicher Weise auf, wenn der Futterkörper einteilig ausgebildet ist, was in der Zeichnung nicht dargestellt ist. Jedoch gilt die nachfolgend beschriebene Nachspannbegrenzung und -sicherung in gleicher Weise selbstverständlich auch für Bohrfutter mit einteilig ausgebildetem Futterkörper.

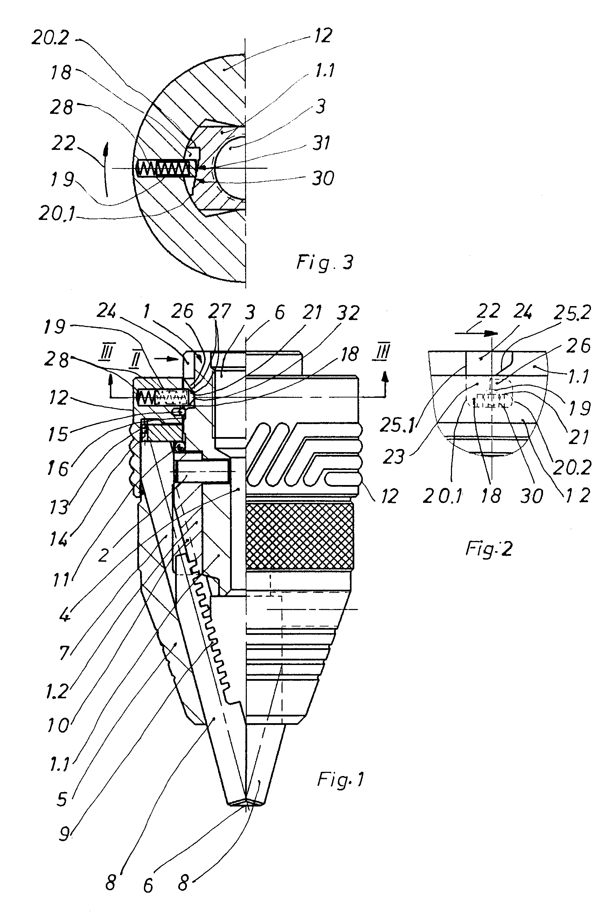

Zur Begrenzung der Nachspannung ist ein Sperring 12 vorgesehen, der am Spindelanschlußteil 1.1 des Futterkörpers 1 jeweils zwischen zwei Endstellungen verdrehbar und axial verschiebbar angeordnet ist. Dabei ist der Sperring 12 mit der Spannhülse 5 in Umfangsrichtung über zwei Zahnkränze 13, 14 kuppelbar, die in der dem eingekuppelten Zustand entsprechenden axialen Endstellung des Sperrings 12 miteinander im Eingriff stehen, wie dies die Fig. 1 zeigt. In der anderen axialen Endstellung des Sperrings 12 ist der Eingriff zwischen den beiden Zahnkränzen 13, 14 aufgehoben. Zwischen dem Sperring 12 und dem Spindelanschlußteil 1.1 des Futterkörpers 1 ist eine Rasteinrichtung wirksam, deren Rastfeder 15 den Sperring 12 in seinen dem eingekuppelten Zustand und dem ausgekuppelten Zustand entsprechenden beiden axialen Endstellungen in jeweils einem Rastsitz festhält, von welchen nur einer in Form einer Ringnut 16 am Spindelanschlußteil 1.2 in der Zeichnung erkennbar ist. Diese Rastsitze lassen die Verdrehung des Sperrings 12 gegenüber dem Futterkörper 1 unbehindert. In Umfangsrichtung werden die beiden Endstellungen des Sperrings 12 durch eine Ausnehmung 18 und einen in die Ausnehmung 18 greifenden Anschlagstift 19 gebildet, wobei der radial abstehende Anschlagstift 19 wahlweise am Sperring 12 oder an dem Spindelanschlußteil 1.1 des Futterkörpers 1 und umgekehrt die Ausnehmung 18 am Spindelanschlußteil 1.1 oder am Sperring 12 vorgesehen sein kann. Im Ausführungsbeispiel befindet sich der Anschlagstift 19 am Sperring 12, die Ausnehmung 18 im Futterkörper 1, so daß die relativ zur Ausnehmung 18 nachspannende Verstellrichtung des Anschlagstiftes 19 übereinstimmt und mit der nachspannenden Drehrichtung des Sperrings 12 in Bezug auf den Futterkörper 1 (Pfeil 22). In jedem Fall ist die Ausnehmung 18 in Umfangsrichtung größer als die Dicke des Anschlagstiftes 19 und die Enden der Ausnehmung 18 bilden in Umfangsrichtung Anschlagflächen 20.1, 20.2 für den Anschlagstift 19, wodurch die Verdrehung des Sperrings 12 im wesentlichen auf die Länge der Ausnehmung 18 in Umfangrichtung begrenzt wird. Die Ausnehmung 18 schließt an ihrem in der nachspannenden Drehrichtung (Pfeil 22) des Sperrings 12 hinteren Ende 20.1 mit einer axial gerichteten Mündung 23 an eine zur Aufnahme des Anschlagstifts 19 eingerichtete Aussparung 24 an. Die Mündung 23 gibt den axialen Übertritt des Anschlagstiftes 19 zwischen diesem Ende 20.1 der Ausnehmung 18 und der Aussparung 24 frei. Steht der Anschlagstift 19 in der Mündung 23 bzw. in der Aussparung 24, so ist die axiale Verstellung des Sperrings 12 zwischen seinen dem eingekuppelten und dem ausgekuppelten Zustand entsprechenden beiden axialen Endstellungen möglich. Befindet sich der Anschlagstift 19 am mündungsseitigen Ende 20.1 in der Ausnehmung 18, stehen die beiden Zahnkränze 13, 14 miteinander im Eingriff. Befindet sich der Anschlagstift 19 in der Mündung 23 selbst oder in der Aussparung 24, so sind die beiden Zahnkränze 13, 14 voneinander entkuppelt.

Die Aussparung 24 ist mit sich in Umfangsrichtung gegenüberliegenden Führungsflächen 25.1, 25.2 versehen, die beim axialen Verstellen des Sperrings 12 aus der dem ausgekuppelten Zustand entsprechenden Endstellung in die dem eingekuppelten Zustand entsprechende Endstellung eine den Anschlagstift 19 in die Mündung 23 hinein leitende Führung bilden. Diese Führung hat zur Folge, daß sich der Sperring 12 beim axialen Verschieben in die dem eingekuppelten Zustand entsprechende Endstellung selbsttätig in die für den Durchtritt des Anschlagstiftes 19 durch die Mündung 23 richtige Drehstellung einstellt.

Der Sperring 12 kann in jeder Stellung seines Drehweges von der Spannhülse 5 entkuppelt werden, so daß ein vorheriges Öffnen des Bohrfutters nicht erforderlich ist. Dazu erstreckt sich die Aussparung 24 von der Mündung 23 aus in Umfangsrichtung (Pfeil 22) gleich weit wie die Ausnehmung 18. Die Aussparung 24 ist von der Ausnehmung 18 durch eine zur Mündung 23 vorspringende Nase 26 getrennt. Der Anschlagstift 19 ist in seiner Längsrichtung verschiebbar geführt und sein Kopf und die die Ausnehmung 18 zur Nase 26 hin begrenzende Randfläche 21 sind mit Anlaufschrägen 27 versehen. Das hat zur Folge, daß der in der Ausnehmung 18 stehende Anschlagstift 19 von der Nase 26 über die Anlaufschrägen 27 gegen die Kraft einer Feder 28 aus der Ausnehmung 18 zurückgedrückt wird und in die Aussparung 24 wieder vorspringt, wenn der Sperring 12 axial aus der dem eingekuppelten Zustand entsprechenden Endstellung in die dem ausgekuppelten Zustand entsprechende Endstellung verschoben wird und dabei der Anschlagstift 19 im zurückgedrückten Zustand die Nase 26 passiert.

Zur Sicherung des jeweiligen Nachspannzustands ist in aufeinander folgenden, radial vorstehenden Anschlägen 30 für den Kopf des Anschlagstiftes 19 vorgesehen. Die einander zugeordneten und zur gegenseitigen Anlage kommenden Flächen an den Anschlägen 30 einerseits und am Kopf des Anschlagstiftes 19 andererseits sind so ausgebildet, daß der Anschlagstift 19 beim Verdrehen des Sperrings in der nachspannenden Drehrichtung (Pfeil 22) unter jeweils radialem Verschieben gegen die Feder 28 über die Anschläge 30 hinweggleitet und in der entgegengesetzten Drehrichtung an den Anschlägen 30 festgehalten wird. Diese Anschläge 30 sind auf einem Boden 31 ausgebildet, der dem Anschlagstift 19 im wesentlichen radial gegenüber liegt und die Ausnehmung 18 in dieser Richtung begrenzt. Im einzelnen liegt der Anschlagstift 19 an jeweils zwei in Umfangsrichtung aneinander anschließenden Flächen 30.1, 30.2 der Anschläge 30 an. Von diesen jeweils beiden Flächen liegt die in der mit dem Pfeil 22 übereinstimmenden, relativ zur Ausnehmung 18 nachspannenden Verstellrichtung des Anschlagstiftes 19 vordere Fläche 30.1 der Stirnseite 32 des Anschlagstiftes 19 und die hintere Fläche 30.2 an der seitlichen Umfangsfläche 33 des Anschlagstiftes 19 an. Dabei bilden die Anschläge 30 eine getreppte Stufenfolge, wobei die steile Stufenstirn 30.2 der Umfangsfläche 33 des Anschlagstiftes 19 und die jeweils zwischen zwei Stufenstirnen liegende Stufenfläche 30.1 der Stirnfläche 32 des Anschlagstiftes 19 anliegt. Die Stufenstirn 30.2 der Anschläge 30 blockiert daher den Sperring 12 nur gegen Verdrehungen in zum Pfeil 22 entgegengesetzter Drehrichtung. Wird der Sperring 12 axial in die von der Spannhülse 5 entkuppelte Endstellung verschoben, löst sich der Sperring 12 auch von den Anschlägen 30, so daß sich der Sperring 12 in die Ausgangsstellung zurückdrehen kann. Entsprechend der getreppten Stufenfolge vertieft sich die Ausnehmung 18 in Richtung des Pfeiles 22 radial zunehmend. Dabei sind alle jeweils die Stufenstirn bildenden Stufenflächen 30.2 zueinander parallel, ebenso sind alle jeweils zwischen den Stufenstirnflächen liegenden Stufenflächen 30.1 untereinander parallel. Die Stirnfläche 32 des Anschlagstiftes 19 kann im wesentlichen senkrecht zur Stiftachse ausgerichtet sein.

## Patentansprüche

1. Nachspannendes Bohrfutter mit einem zum Anschluß an eine Bohrspindel, insbes. Hammerbohrspindel, eingerichteten Futterkörper (1), mit Spannbacken (8) und einer am Futterkörper drehbar geführten Spannhülse (5) zum Verstellen der Spannbacken (8), ferner mit einem Sperring (12), der am Futterkörper (1) jeweils zwischen zwei Endstellungen in Umfangsrichtung verdrehbar und axial verschiebbar und mit der Spannhülse (5) in Umfangsrichtung über zwei Zahnkränze (13, 14) kuppelbar ist, die in der dem eingekuppelten Zustand entsprechenden axialen Endstellung des Sperrings (12) miteinander im Eingriff stehen, und mit einem zur Drehbegrenzung des Sperrings (12) gegenüber dem Futterkörper (1) an einem dieser beiden Teile angeordneten Anschlagstift (19), der in eine im anderen Teil vorgesehene Ausnehmung (18) greift, deren Enden in Umfangsrichtung Anschlagflächen (20.1, 20.2) für den Anschlagstift (19) bilden, wobei die Ausnehmung (18) an ihrem in der relativ zu ihr nachspannenden Verstellrichtung des Anschlagstiftes (19) hinteren Ende (20.1) axial in eine zur Aufnahme des Anschlagstifts (19) eingerichtete Aussparung (24) mündet, die sich von dieser Mündung (23) aus in Umfangsrichtung gleich weit wie die Ausnehmung (18) erstreckt und von dieser axial durch eine zur Mündung (23) vorspringende Nase (26) getrennt ist, und wobei der Anschlagstift (19) in seiner Längsrichtung verschiebbar geführt ist und sein Kopf und/oder die die Ausnehmung (18) auf der Seite der Nase (26) axial begrenzende Randfläche (21) in Axialrichtung mit Anlaufschrägen (27) versehen sind, so daß der Anschlagstift (19) von der Nase (26) über die Anlaufschrägen (27) gegen die Kraft (28) einer Feder aus der Ausnehmung (18) zurückgedrückt wird und in die Aussparung (24) wieder vorspringt, wenn der Sperring (12) axial aus der dem eingekuppelten Zustand entsprechenden Endstellung verschoben wird und dabei der Anschlagstift (19) im zurückgedrückten Zustand die Nase (26) passiert, dadurch gekennzeichnet, daß in der Ausnehmung (18) eine Reihe von in Umfangsrichtung aufeinander folgenden, radial vorstehenden Anschlägen (30) für den Kopf des Anschlagstiftes (19) vorgesehen ist und die einander zugeordneten und zur gegenseitigen Anlage kommenden Flächen an den Anschlägen (30) einerseits und am Kopf des Anschlagstiftes (19) andererseits so ausgebildet sind, daß der Anschlagstift (19) beim Verdrehen des Sperrings (12) in der nachspannenden Drehrichtung unter jeweiligem Verschieben gegen die Feder (28) über die Anschläge (30) hinweggleitet und in der entgegengesetzten Drehrichtung an den Anschlägen (30) festgehalten wird.

2. Bohrfutter nach Anspruch 1, dadurch gekennzeichnet,daß die Ausnehmung (18) radial durch einen dem Anschlagstift (19) gegenüber liegenden Boden2(31) begrenzt ist, auf dem die Anschläge (30) ausgebildet sind.

3. Bohrfutter nach Anspruch 1 oder 2, dadurch gekennzeichnet, daß der Anschlagstift (19) an jeweils zwei in Umfangsrichtung aneinander anschließenden Flächen (30.1, 30.2) der Anschläge (30) anliegt, von welchen die in der relativ zur Ausnehmung (18) nachspannenden Verstellrichtung des Anschlagstiftes (19) vordere Fläche (30.1) der Stirnseite (32) des Anschlagstiftes (19) und die hintere Fläche (30.2) an einer zur Stiftachse im wesentlichen parallelen Seitenfläche des Anschlagstiftes (19) anliegt.

4. Bohrfutter nach Anspruch 3, dadurch gekennzeichnet, daß die zur Stiftachse im wesentlichen parallele Seitenfläche des Anschlagstiftes (19) von dessen Umfangsfläche (33) gebildet ist.

5. Bohrfutter nach Anspruch 3 oder 4, dadurch gekennzeichnet, daß die Anschläge (30) eine sägenartige Zahnreihe bilden, wobei die steile Sägezahnbrust der Seitenfläche des Anchlagstiftes (19) und der Sägezahnrücken der Stirnfläche des Anschlagstiftes (19) anliegt.

6. Bohrfutter nach Anspruch 3 oder 4, dadurch gekennzeichnet, daß die Anschläge (30) eine getreppte Stufenfolge bilden, wobei die steile Stufenstirn (30.2) der Seitenfläche(33) des Anschlagstiftes (19) anliegt.

7. Bohrfutter nach Anspruch 6, dadurch gekennzeichnet, daß sich die Ausnehmung (18) entsprechend der getreppten Stufenfolge in der relativ zur Ausnehmung (18) nachspannenden Verstellrichtung des Anschlagstiftes (19) radial zunehmend vertieft, wobei alle einander entsprechenden Stufenflächen (30.1 bzw. 30.2) zueinander parallel sind, und daß die Stirnfläche(33) des Anschlagstiftes (19) im wesentlichen senkrecht zur Stiftachse ausgerichtet ist.

## Claims

1. A retightening drilling chuck comprising a chuck body (1) which is arranged to be connected to a drilling spindle, in particular a hammer drilling spindle, clamping jaws (8) and a clamping sleeve (5) which is guided rotatably on the chuck body for adjustment of the clamping jaws (8), further comprising a locking ring (12) which is rotatable in the peripheral direction and axially displaceable on the chuck body (1) between two limit positions in each case and which can be coupled to the clamping sleeve (5) in the peripheral direction by way of two annular tooth configurations (13, 14) which are in engagement with each other in the axial limit position of the locking ring (12) which corresponds to the coupled condition, and a stop pin (19) which for limiting the rotary movement of the locking ring (12) relative to the chuck body (1) is arranged on one of those two components and which engages into a recess (18) which is provided in the other component and the ends of which form in the peripheral direction stop surfaces (20.1, 20.2) for the stop pin (19), wherein the recess (18), at its end (20.1) which is rearward in the direction of displacement of the stop pin (19) for the retightening effect relative to the recess, opens axially into an opening (24) which is adapted to receive the stop pin (19) and which extends from said mouth (23) in the peripheral direction over the same distance as the recess (18) and is axially separated from same by a nose (26) which projects relative to the mouth (23), and wherein the stop pin (19) is guided displaceably in its longitudinal direction and its head and/or the edge surface (21) which axially defines the recess (18) on the side of the nose (26) are provided in the axial direction with inclined run-on surfaces (27) so that the stop pin (19) is urged back out of the recess (18) by the nose (26) by way of the inclined run-on surfaces (27) against the force (28) of a spring and projects into the opening (24) again when the locking ring (12) is displaced axially out of the limit position corresponding to the coupled condition and when that happens the stop pin (19) in the urged-back condition passes the nose (26), characterised in that provided in the recess (18) is a series of peripherally successive radially projecting stops (30) for the head of the stop pin (19) and the mutually associated surfaces which come into contact with each other on the stops (30) on the one hand and on the head of the stop pin (19) on the other band are such that when the locking ring (12) is turned in the retightening direction of rotation the stop pin (19) slides over the stops (30) with respective displacement against the spring (28) and in the opposite direction of rotation is retained at the stops (30).

2. A drilling chuck according to claim 1 characterised in that the recess (18) is radially defined by a bottom (31) which is opposite the stop pin (19) and on which the stops (30) are provided.

3. A drilling chuck according to claim 1 or claim 2 characterised in that the stop pin (19) bears against two peripherally adjoining surfaces (30.1, 30.2) of each of the stops (30), of which surfaces the surface (30.1) which leads in the direction of displacement of the stop pin (19), for a retightening effect relative to the recess (18), bears against the end (32) of the stop pin (19), and the trailing surface (30.2) bears against a side surface of the stop pin (19), which is substantially parallel to the axis of the pin.

4. A drilling chuck according to claim 3 characterised in that the side surface of the stop pin (19), which is substantially parallel to the axis of the pin, is formed by the peripheral surface (33) of the stop pin.

5. A drilling chuck according to claim 3 or claim 4 characterised in that the stops (30) form a saw edge-like row of teeth, wherein the steep saw tooth face bears against the side surface of the stop pin (19) and the saw tooth back bears against the end face of the stop pin (19).

6. A drilling chuck according to claim 3 or claim 4 characterised in that the stops (30) form a stepped sequence of stages wherein the steep step end (30.2) bears against the side surface (33) of the stop pin (19).

7. A drilling chuck according to claim 6 characterised in that the recess (18) radially increases in depth in accordance with the stepped sequence of stages in the direction of displacement of the stop pin (19) for the retightening effect relative to the recess (18), wherein all mutually corresponding step surfaces (30.1 and 30.2 respectively) are parallel to each other, and that the end face (33) of the stop pin (19) is oriented substantially perpendicularly to the axis of the pin.

## Revendications

1. Mandrin de serrage autobloquant, comprenant un corps de mandrin (1) agencé pour le raccordement à une broche de perçage, en particulier une broche de perçage à marteau, des mâchoires de serrage (8) et une douille de serrage (5) pour le réglage des mâchoires de serrage (8) guidée de manière tournante sur le corps de mandrin, ainsi qu'une bague de blocage (12) qui peut respectivement être tournée dans le sens circonférentiel sur le corps de mandrin (1) entre deux positions extrêmes et déplacée dans le sens axial et couplée avec la douille de serrage (5) dans le sens circonférentiel par l'intermédiaire de deux couronnes dentées (13, 14) qui, dans la position de fin de course axiale de la bague de blocage (12) correspondant à l'état couplé, sont en prise l'une avec l'autre, et un goujon d'arrêt (19) pour limiter la rotation de la bague de blocage (12) par rapport au corps de mandrin (1), monté sur l'un de ces deux éléments et s'engageant dans un creux (18) prévu dans l'autre élément, dont les extrémités dans le sens circonférentiel constituent des surfaces d'arrêt (20.1, 20.2) pour ledit goujon d'arrêt (19), l'extrémité (20.1) du creux (18), postérieure dans la direction de réglage du goujon d'arrêt (19) assurant le blocage automatique, débouchant axialement dans un évidement (24) agencé pour la réception du goujon d'arrêt (19), qui s'étend à partir de cette embouchure (23) dans le sens circonférentiel à la même distance que le creux (18) dont il est séparé axialement par un talon (26) en saillie vers l'embouchure (23), et le goujon d'arrêt (19) étant guidé de manière mobile dans sa direction longitudinale, et sa tête et/ou la surface latérale (21) qui délimitent le creux (18) axialement du côté du talon (26) étant munies dans le sens axial de surfaces d'arrêt inclinées (27), de sorte que le goujon d'arrêt (19) est repoussé du creux (18) par le talon (26), par l'intermédiaire des surfaces d'arrêt inclinées (27), contre la force d'un ressort (28), et qu'il dépasse à nouveau dans l'évidement (24) lorsque la bague de blocage (12) est déplacée axialement à partir de la position de fin de course correspondant à l'état couplé et que le goujon d'arrêt (19) passe alors devant le talon (26) à l'état repoussé, **caractérisé par le fait** que dans le creux (18) est prévue une série de butées (30) pour la tête du goujon d'arrêt (19) qui se succèdent dans le sens circonférentiel et font saillie dans le sens radial, et que les surfaces associées et venant en contact les unes avec les autres sont conformées d'une part sur les butées (30) et d'autre part sur la tête du goujon d'arrêt (19) de telle façon que, lors de la rotation de la bague de blocage (12) dans le sens du resserrage, le goujon d'arrêt (19) glisse, respectivement avec déplacement contre le ressort (28), par-dessus les butées (30) et que, dans le sens de rotation opposé, il est retenu sur les butées (30).

2. Mandrin de serrage selon la revendications 1, caractérisé par le fait que le creux (18) est radialement limité par un fond (31) situé en face du goujon d'arrêt (19), sur lequel sont conformées les butées (30).

3. Mandrin de serrage selon l'une des revendications 1 ou 2, caractérisé par le fait que le goujon d'arrêt (19) est respectivement appliqué contre deux surfaces (30.1, 30.2) des butées (30) qui sa suivent dans le sens circonférentiel, la surface (30.1) située à l'avant dans la direction de déplacement du goujon d'arrêt (19) par rapport au creux (18) correspondant à l'autoblocage étant appliquée contre la face frontale (32) du goujon d'arrêt (19) et la surface (30.2) située à l'arrière étant appliquée contre une surface latérale dudit goujon d'arrêt (19) qui est sensiblement parallèle à l'axe du goujon.

4. Mandrin de serrage selon la revendication 3, caractérisé par le fait que la surface latérale du goujon d'arrêt (19) sensiblement parallèle à l'axe du goujon est constituée par la surface périphérique (33) dudit goujon.

5. Mandrin de serrage selon l'une des revendications 3 ou 4, caractérisé par le fait que les butées (30) forment une rangée de dents de scie, le front d'attaque raide des dents de scie étant appliqué contre la surface latérale du goujon d'arrêt (19) et le dos des dents de scie étant appliqué contre la face frontale du goujon d'arrêt (19).

6. Mandrin de serrage selon l'une des revendications 3 ou 4, caractérisé par le fait que les butées (30) forment un échelonnement en escalier, le front raide (30.2) des gradins étant appliqué contre la face latérale (33) du goujon d'arrêt (19).

7. Mandrin de serrage selon la revendication 6, caractérisé par le fait que la profondeur du creux (18) augmente radialement dans la direction de déplacement du goujon d'arrêt (19) correspondant à l'autoblocage par rapport au creux (18), conformément à l'échelonnement en escalier, toutes les surfaces de gradins (30.1 et respectivement 30.2) correspondant les unes aux autres étant parallèles, et que la face frontale (33) du goujon d'arrêt (19) est orientée sensiblement perpendiculairement par rapport à l'axe du goujon.
